**Europäisches Patentamt**

**European Patent Office**

**Office européen des brevets**

(19)

(11) Veröffentlichungsnummer : **0 467 147 B1**

(12)

# EUROPÄISCHE PATENTSCHRIFT

(45) Veröffentlichungstag der Patentschrift :
**23.09.92 Patentblatt 92/39**

(51) Int. Cl.$^5$ : **B01D 39/08, B01D 35/06**

(21) Anmeldenummer : **91110990.8**

(22) Anmeldetag : **03.07.91**

(54) Filter- oder Katalysatorkörper.

(30) Priorität : **19.07.90 DE 4022937**

(43) Veröffentlichungstag der Anmeldung :
**22.01.92 Patentblatt 92/04**

(45) Bekanntmachung des Hinweises auf die
Patenterteilung :
**23.09.92 Patentblatt 92/39**

(84) Benannte Vertragsstaaten :
**AT BE DE ES FR GB IT NL SE**

(56) Entgegenhaltungen :
**EP-A- 0 226 438**
**EP-A- 0 387 394**

(56) Entgegenhaltungen :
**DE-B- 2 804 154**
**FR-A- 2 482 867**
**GB-A- 960 560**
**GB-A- 2 099 872**

(73) Patentinhaber : **Schwäbische Hüttenwerke**
**Gesellschaft mit beschränkter Haftung**
**Wilhelmstrasse 67 Postfach 3280**
**W-7080 Aalen-Wasseralfingen (DE)**

(72) Erfinder : **Härle, Hans A., Dipl.-Ing.**
**Röttingerstrasse 38**
**W-7085 Bopfingen (DE)**

(74) Vertreter : **Lorenz, Werner, Dipl.-Ing.**
**Fasanenstrasse 7**
**W-7920 Heidenheim (DE)**

EP 0 467 147 B1

**Beschreibung**

Die Erfindung betrifft einen Filter- oder Katalysatorkörper, der Drähte oder Fasern aufweist, die ein- oder mehrlagig als Gewebe, Geflecht oder Gestrick ausgebildet sind, wobei die Drähte oder Fasern durch Versintern oder Verschweißen wenigstens teilweise miteinander verbunden sind.

Es sind bereits Filter- bzw. Katalysatorkörper bekannt, die aus mehreren Schichten bzw. Lagen von Geweben, Geflechten oder Gestricken aus Metallfasern oder Metalldrähten bestehen, welche zusammengesintert worden sind.

Filter dieser Art werden als sogenannte Tiefbettfilter eingesetzt, wobei die Abscheidung des zu filternden Mediums an den Oberflächen der mehrlagigen Gewebe, Geflechte oder Gestricke bzw. deren Bestandteilen erfolgt. Durch die zur Verfügung stehende Oberfläche wird die Wirksamkeit des Filters begrenzt.

Derartige Filter können auch als Katalysatoren, z.B. zur Abgasreinigung von Verbrennungsmotoren bei Kraftfahrzeugen, eingesetzt werden. Auch hierfür sind möglichst große Oberflächen erforderlich, um einen Elektronenaustausch stattfinden zu lassen.

Bei der Verwendung als Katalysator werden entsprechend katalytisch wirkende Werkstoffe verwendet, wie z.B. Platin, Rhodium oder Vanadium.

Bekannt sind auch Rußfilter für Dieselmotore, welche zumeist aus keramischem Werkstoff bestehen. Die heißen Motorabgase werden dabei durch den keramischen Filterkörper geleitet, wobei in den porösen Kanälen zusammen bei den dabei vorherrschenden hohen Temperaturen, der Ruß, d.h. Kohlenstoff, in den Filterwänden des Filterkörpers in Gas und Asche umgewandelt wird. Neben keramischen Filterkörpern sind auch bereits Filterkörper aus anderen Filtermaterialien, wie z.B. Sinterwerkstoffe aus Metall, vorgeschlagen worden.

Die bekannten Filter und Katalysatoren haben jedoch den Nachteil, daß deren Abscheideflächen beschränkt sind. Aus diesem Grunde sind relativ viele Lagen aus Geweben oder Gestricken notwendig, wobei die Dicken je nach Anwendungsfall zwischen einigen Millimetern und mehreren Metern betragen können.

In der EP-A-0.387.394 (Anmeldetag: 2.8.89; Veröffentlichungstag: 19.9.90) ist bereits ein Verfahren zur Herstellung eines Katalysatorkörpers und ein Katalysator vorgeschlagen, bei dem auf die einzelnen Lagen oder deren Bestandteile pulverförmige oder körnige Partikel aufgesintert werden.

Auf diese Weise wird eine mehrfache Oberflächenvergrößerung erreicht, womit eine vielfach höhere Adsorptionsfläche und damit eine wesentlich größere Filterfläche zur Verfügung steht. Damit erhält man bei gleicher Filterleistung eine deutliche Größenreduzierung des Filters oder bei einer gleichen Filtergröße eine deutlich höhere Filterleistung.

Der vorliegenden Erfindung liegt die Aufgabe zugrunde einen Filter- oder Katalysatorkörper dieser Art bezüglich seines Wirkungsgrades, insbesondere seiner Filterleistung, noch mehr zu verbessern.

Erfindungsgemäß wird diese Aufgabe dadurch gelöst, daß das Gewebe, Geflecht oder Gestrick mit eingebrachten pulverförmigen, körnigen oder spanartigen Partikeln dotiert ist, die mit den Drähten oder Fasern versintert sind, wobei im Einlaßbereich des Filterkörpers die Filterdichte durch eine geringere Dotierung niedriger ist.

Durch die unterschiedliche Filterdichte, insbesondere die geringere Filterdichte im Eingangsbereich wird praktisch eine Art Vorfilter geschaffen. Im Laufe des Filterbetriebes setzt sich dieser nämlich eingangsseitig an der Oberfläche zu. Es entsteht praktisch bin Filterkuchen auf der Filteroberfläche, welcher unter anderem einen höheren Gegendruck bewirkt. Dies bedeutet, daß bei einem Einsatz als Abgasfilter für einen Verbrennungsmotor die Motorleistung entsprechend niedriger wird.

Durch die Bildung des erfindungsgemäßen Vorfilters wird nun überraschenderweise eine deutlich größere Einlagerungsmöglichkeit für abzuscheidende Verunreinigung in dem Filter geschaffen. Die unvermeidliche Filterkuchenfläche wird größer, denn sie kann aufgrund der geringeren Filterdichte auch entsprechend tiefer in den Filterkörper eindringen. Auf diese Weise ergibt sich eingangsseitig eine deutlich höhere Filteroberfläche und damit auch eine höhere Speicherkapazität. Damit setzt sich der Filter nicht so schnell vollständig zu und es liegt auch ein geringerer Gegendruck vor.

Als weiterer Vorteil kommt hinzu, daß der erfindungsgemäße Filter bei gleicher Leistung billiger in der Herstellung ist, weil hierzu weniger Material benötigt wird.

In einer möglichen Ausgestaltung kann auch vorgesehen sein, daß die Filterdichte im Auslaßbereich durch eine geringere Dotierung mit Partikeln wieder abnimmt.

Durch diese Ausgestaltung läßt sich ohne nennenswerte Beeinträchtigung des Wirkungsgrades des Filters der durch den Filter erzeugte Gegendruck erniedrigen. Auf diese Weise ist auch eine leichtere Abströmung der gereinigten Abgase möglich.

Die Drähte bzw. Fasern können aus Metall, Kunststoff, Keramik oder Mischungen daraus bestehen. Ebenso sind im Bedarfsfalle auch andere Materialien möglich.

Als Partikel, die in das Gewebe, Geflecht oder Gestrick eingebracht werden, können z.B. Partikel aus Metall, Kunststoff, Keramik oder Mischungen daraus verwendet werden.

Wenn ein Einsatz als Katalysator vorgesehen ist, können katalytisch wirkende Werkstoffe, wie z.B. Platin, Rhodium oder Vanadium, zur Entfernung bzw. Umwandlung von Kohlenmonoxyd, Kohlenwasserstoffe und Stickoxyde verwendet werden.

Bei einem Einsatz als Rußfilter können Mangan, Molybdän oder dergleichen verwendet werden, die die Rußkonversion verbessern.

In vorteilhafter Weise kann man als Ausgangsmaterial für das Gewebe, Geflecht oder Gestrick aus Drähten oder Fasern sinterfähiges Material, wie z.B. Sintermetall, verwenden. Nimmt man dann auch sinterfähige Partikel, so kann man in vorteilhafter Weise in einem einzigen Sintervorgang die Metallfasern, Metalldrähte und die Partikel miteinander versintern. Dabei kommt es im Unterschied zu herkömmlichen Filtern zu einer Versinterung in größerem Maße d.h. mit größeren Berührungsflächen, wodurch sich auch eine größere Festigkeit des Filterkörpers ergibt.

Nachfolgend ist ein Ausführungsbeispiel der Erfindung anhand der Zeichnung prinzipmäßig beschrieben.

Es zeigt:

Fig. 1 einen Filter bekannter Bauart;

Fig. 2 den erfindungsgemäßen Filter mit Vorfilter.

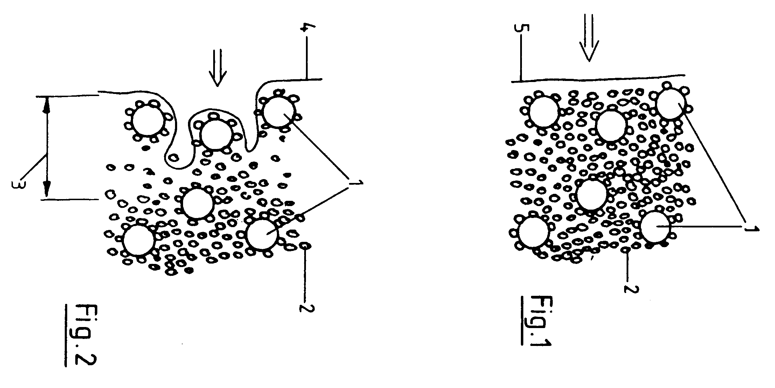

Der in der Fig. 1 dargestellte bekannte Filter besteht aus Metalldrähten 1, die z.B. regelmäßig oder unregelmäßig als Geflecht, Gestrick oder Gewebeschicht - bzw. lagenartig miteinander verbunden sind.

Zwischen die Drähte, die z.B. aus Sintermetall bestehen, werden kleinere Partikel 2 in Form von Pulver, Körner oder in Spanform eingebracht.

Die Einbringung der Partikel in das Gewebe, Geflecht oder Gestrick kann auf verschiedene Weise erfolgen. So können sie z.B. durch eine klebrige Flüssigkeit eingebracht werden. Ebenso können sie durch Einrütteln, durch eine elektrische und/oder magnetische Aufladung und dergleichen eingebracht werden.

Bei einer Verwendung von sinterfähigen Werkstoffen kann anschließend der Filterkörper in einem einzigen Arbeitsgang hergestellt werden.

Das in der EP-A-0.387.394 beschriebene Verfahren, wird gemäß Ausführungsbeispiel nach der Fig. 2 dahingehend abgewandelt, daß die Dotierung bzw. Einbringung der Partikel 2 in das Gewebe, Geflecht oder Gestrick aus Drähten 1 derart erfolgt, daß in einem Einlaßbereich 3 des Filterkörpers eine geringere Dotierung stattfindet. Hierzu wird auf den durch Pfeile in der Fig. 2 dargestellten Bereich verwiesen. Auf diese Weise wird in dem Einlaßbereich 3 eine Art Vorfilter geschaffen, wobei die Filterdichte in Abhängigkeit von dem zu reinigenden Medium so gering ist, daß der unvermeidliche Filterkuchen aus den abzuscheidenden Verunreinigungen in den Filterkörper selbst, d.h. in den Einlaßbereich 3 teilweise noch eindringt. Der Verlauf der Oberfläche des Filterkuchens ist durch die Linie 4 in der Fig. 2 dagestellt. Wie ersichtlich ist die dabei erhaltene Oberfläche wesentlich größer als die Filteroberfläche bei dem bekannten Filterkörper nach der Fig. 1, welche durch die Linie 5 dagestellt ist.

Ebenso wie im Einlaßbereich 3 kann in dem nicht dagestellten Auslaßbereich die Filterdichte durch eine entsprechend geringere Dotierung mit Partikeln 2 geringer sein.

## Patentansprüche

1. Filter- oder Katalysatorkörper, der Drähte oder Fasern aufweist, die ein- oder mehrlagig als Gewebe, Geflecht oder Gestrick ausgebildet sind, wobei die Drähte oder Fasern durch Versintern oder Verschweißen wenigstens teilweise miteinander verbunden sind,
   **dadurch gekennzeichnet, daß**
   das Gewebe, Geflecht oder Gestrick (1) mit eingebrachten pulverförmigen, körnigen oder spanartigen Partikeln (2) dotiert ist, die mit den Drähten oder Fasern versintert sind, wobei im Einlaßbereich (3) des Filterkörpers die Filterdichte durch eine geringere Dotierung niedriger ist.

2. Filter- oder Katalysatorkörper nach Anspruch 1,
   **dadurch gekennzeichnet, daß**
   die Filterdichte vom Einlaßbereich (3) aus in Filtrierrichtung durch eine zunehmende Dotierung mit Partikel (2) zunimmt.

3. Filter- oder Katalysatorkörper nach Anspruch 1 oder 2,
   **dadurch gekennzeichnet, daß**
   die Filterdichte im Auslaßbereich durch eine geringere Dotierung mit Partikeln (2) abnimmt.

4. Filter- oder Katalysatorkörper nach Anspruch 1 oder 2,
   **dadurch gekennzeichnet, daß**
   das Gewebe, Geflecht oder Gestrick (1) aus Metall besteht.

5. Filter- oder Katalysatorkörper nach Anspruch 1, 2 oder 3,
   **dadurch gekennzeichnet, daß**
   das Gewebe, Geflecht oder Gestrick (1) aus Keramik besteht.

6. Filter- oder Katalysatorkörper nach Anspruch 1, 2 oder 3,
   **dadurch gekennzeichnet, daß**
   das Gewebe, Geflecht oder Gestrick (1) aus Kunststoff besteht.

7. Filter- oder Katalysatorkörper nach einem oder mehreren der Ansprüche 1 - 6,
   **dadurch gekennzeichnet, daß**
   das Gewebe, Geflecht oder Gestrick (1) aus einer Mischung aus Metall und/oder Keramik und/oder Kunststoff besteht.

8.  Filter- oder Katalysatorkörper nach einem oder mehreren der Ansprüche 1 - 7,
    **dadurch gekennzeichnet,** daß
    die Partikeln (2) aus metallischen Werkstoffen bestehen.

9.  Filter- oder Katalysatorkörper nach einem oder mehreren der Ansprüche 1 - 7,
    **dadurch gekennzeichnet,** daß
    die Partikel (2) aus Kunststoff bestehen.

10. Filter- oder Katalysatorkörper nach einem oder mehreren der Ansprüche 1 - 7,
    **dadurch gekennzeichnet**, daß
    die Partikel (2) aus Keramik bestehen.

11. Filter- oder Katalysatorkörper nach einem oder mehreren der Ansprüche 1 - 10,
    **dadurch gekennzeichnet,** daß
    die Partikel (2) aus einer Mischung aus einem metallischen Werkstoff und/oder aus Kunststoff und/oder aus Keramik bestehen.

12. Filter- oder Katalysatorkörper nach einem oder mehreren der Ansprüche 1 - 11,
    **dadurch gekennzeichnet,** daß
    das Gewebe, Geflecht oder Gestrick (1) und/oder die Partikeln (2) aus katalytischen Werkstoffen bestehen und/oder mit katalytischen Werkstoffen beschichtet sind.

13. Filter- oder Katalysatorkörper nach Anspruch 12,
    **dadurch gekennzeichnet,** daß
    die katalytischen Werkstoffe Platin, Vanadium, Rhodium sind.

## Claims

1.  Filter or catalyst body comprising wires or fibres in the form of a single- or multi-layer woven, interlaced or knitted fabric, the wires or fibres being at least partially connected to one another by sintering or welding, characterised in that pulverulent, granular or chipped particles (2) are added to the woven, interlaced or knitted fabric (1) and are sintered together with the wires or fibres, the filter density being lower in the inlet region (3) of the filter body as a result of a lesser addition of particles.

2.  Filter or catalyst body according to claim 1, characterised in that the filter density increases from the inlet region (3) in the direction of filtration as a result of the increasing addition of particles (2).

3.  Filter or catalyst body according to claim 1 or claim 2, characterised in that the filter density decreases in the outlet region as a result of a lesser addition of particles (2).

4.  Filter or catalyst body according to claim 1 or claim 2, characterised in that the woven, interlaced or knitted fabric (1) consists of metal.

5.  Filter or catalyst body according to claim 1, 2 or 3, characterised in that the woven, interlaced or knitted fabric (1) consists of ceramics.

6.  Filter or catalyst body according to claim 1, 2 or 3, characterised in that the woven, interlaced or knitted fabric (1) consists of plastic.

7.  Filter or catalyst body according to one or more of claims 1 - 6, characterised in that the woven, interlaced or knitted fabric (1) consists of a mixture of metal and/or ceramics and/or plastic.

8.  Filter or catalyst body according to one or more of claims 1 - 7, characterised in that the particles (2) consist of metal materials.

9.  Filter or catalyst body according to one or more of claims 1 - 7, characterised in that the particles (2) consist of plastic.

10. Filter or catalyst body according to one or more of claims 1 - 7, characterised in that the particles (2) consist of ceramics.

11. Filter or catalyst body according to one or more of claims 1 - 10, characterised in that the particles (2) consist of a mixture of a metal material and/or plastic and/or ceramics.

12. Filter or catalyst body according to one or more of claims 1 - 11, characterised in that the woven, interlaced or knitted fabric (1) and/or the particles (2) consist of catalytic materials and/or are coated with catalytic materials.

13. Filter or catalyst body according to claim 12, characterised in that the catalytic materials are platinum, vanadium and rhodium.

## Revendications

1.  Corps de filtre ou de catalyseur, comportant des fils ou fibres qui sont disposés en une ou plusieurs couches sous la forme de tissu, d'entrelacs ou de tricot, où les fils ou fibres sont au moins partiellement liés mutuellement par agglomération ou soudage,

**caractérisé** en ce que le tissu, entrelacs ou tricot (1) est doté d'une adjonction de particules (2) sous forme de poudre, de grains ou de copeaux, ces particules étant fixées par agglomération avec les fils ou fibres, la densité du filtre étant plus basse dans une zone d'entrée (3) du corps de filtre grâce à une dotation moindre.

2. Corps de filtre ou de catalyseur selon la revendication 1,
**caractérisé** en ce que la densité du filtre est croissante à partir de la zone d'entrée (3) dans la direction de filtration, grâce à une dotation croissante en particules (2) .

3. Corps de filtre ou de catalyseur selon la revendication 1 ou 2,
**caractérisé** en ce que la densité du filtre est décroissante dans la zone de sortie, grâce à une dotation décroissante en particules (2).

4. Corps de filtre ou de catalyseur selon la revendication 1 ou 2,
**caractérisé** en ce que le tissu, entrelacs ou tricot (1) est en métal.

5. Corps de filtre ou de catalyseur selon la revendication 1, 2 ou 3,
**caractérisé** en ce que le tissu, entrelacs ou tricot (1) est en céramique.

6. Corps de filtre ou de catalyseur selon la revendication 1, 2 ou 3,
**caractérisé** en ce que le tissu, entrelacs ou tricot (1) est en matière synthétique.

7. Corps de filtre ou de catalyseur selon une ou plusieurs des revendications 1 à 6,
**caractérisé** en ce que le tissu, entrelacs ou tricot (1) est constitué d'un mélange de métal et/ou de céramique et/ou de matière synthétique.

8. Corps de filtre ou de catalyseur selon une ou plusieurs des revendications 1 à 7,
**caractérisé** en ce que les particules (2) sont en matériaux métalliques.

9. Corps de filtre ou de catalyseur selon une ou plusieurs des revendications 1 à 7,
**caractérisé** en ce que les particules (2) sont en matière synthétique.

10. Corps de filtre ou de catalyseur selon une ou plusieurs des revendications 1 à 7,
**caractérisé** en ce que les particules (2) sont en céramique.

11. Corps de filtre ou de catalyseur selon une ou plusieurs des revendications 1 à 10,
**caractérisé** en ce que les particules (2) sont constituées d'un mélange d'un matériau métallique et/ou de matière synthétique et/ou de céramique.

12. Corps de filtre ou de catalyseur selon une ou plusieurs des revendications 1 à 11,
**caractérisé** en ce que le tissu, entrelacs ou tricot (1) et/ou les particules (2) sont en matériaux catalytiques et/ou sont revêtus de matériaux catalytiques.

13. Corps de filtre ou de catalyseur selon la revendication 12,
**caractérisé** en ce que les matériaux catalytiques sont le platine, le vanadium, le rhodium.

Fig.1

Fig.2